(19) Europäisches Patentamt
European Patent Office
Office européen des brevets

(11) **EP 3 417 083 B1**

(12) **EUROPÄISCHE PATENTSCHRIFT**

(45) Veröffentlichungstag und Bekanntmachung des Hinweises auf die Patenterteilung:
**27.11.2019 Patentblatt 2019/48**

(21) Anmeldenummer: **17705305.5**

(22) Anmeldetag: **03.02.2017**

(51) Int Cl.:
*C22C 9/04* (2006.01)       *F16C 33/12* (2006.01)

(86) Internationale Anmeldenummer:
**PCT/EP2017/000144**

(87) Internationale Veröffentlichungsnummer:
**WO 2017/140411 (24.08.2017 Gazette 2017/34)**

(54) **GLEITELEMENT AUS EINER KUPFER-ZINK-LEGIERUNG**

SLIDING COMPONENT MADE OF A COPPER-ZINC-ALLOY

ÉLÉMENT COULISSANT EN ALLIAGE CUIVRE-ZINC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2016 DE 102016001994**

(43) Veröffentlichungstag der Anmeldung:
**26.12.2018 Patentblatt 2018/52**

(73) Patentinhaber: **Wieland-Werke AG**
**89079 Ulm (DE)**

(72) Erfinder:
• **KUHN, Hans-Achim**
**89257 Illertissen (DE)**
• **BÖHME, Susanne**
**89287 Bellenberg (DE)**
• **NEUBRAND, Tobias**
**89597 Munderkingen (DE)**
• **THUMM, Gerhard**
**89155 Erbach (DE)**
• **VOGGESER, Volker**
**89250 Senden (DE)**

(56) Entgegenhaltungen:
JP-A- 2009 041 088       KR-A- 20060 096 877
US-A1- 2007 227 631

EP 3 417 083 B1

**Beschreibung**

Die Erfindung betrifft ein Gleitelement aus einer Kupfer-Zink-Legierung.

Gleitelemente aus Kupfer-Zink-Legierungen werden beispielsweise in Verbrennungsmotoren in beiden Lagerstellen eines Pleuels eingesetzt. Die technischen Anforderungen an den Werkstoff der Gleitelemente werden mit der Entwicklung moderner Motoren größer. Gesetzliche Vorschriften verlangen zudem, den Bleianteil im Werkstoff auf ein Minimum zu reduzieren. Gleichzeitig steigt der Druck, die Kosten der Gleitelemente zu senken.

Eine bekannte Kupfer-Zink-Legierung für Gleitelemente ist CuZn31Si1. Der Legierung können bis zu 0,8 Gew.-% Blei beigemengt sein, um die Zerspanbarkeit des Werkstoffs zu verbessen. Der hohe Anteil von Kupfer in dieser Legierung macht das Gleitelement teuer. Ferner ist bei dieser Legierung der Traganteil der verschleißbeständigen Gefügebestandteile zu gering, um zukünftig den Belastungen, die in modernen Motoren herrschen, Stand zu halten.

Aus der Druckschrift EP 1 158 062 B1 ist ein bleifreier Kupfer-Zink-Aluminium-Knetwerkstoff bekannt, der für Gleitelemente sehr vorteilhafte mechanische Eigenschaften aufweist. Seine geringe Wärmeleitfähigkeit verhindert jedoch eine wirtschaftliche Geschwindigkeit beim Stranggießen.

Des Weiteren ist aus der Druckschrift DE 10 2007 029 991 B4 eine Kupfer-Zink-Legierung für hochbelastete Gleitelemente bekannt. Der Werkstoff besitzt ein verschleißbeständiges Gefüge mit einer Matrix aus $\alpha$-Phase, in die inselartig $\beta$-Phase und harte Mischsilizide eingelagert sind. Der Werkstoff zeichnet sich durch eine hervorragende Kombination von Eigenschaften aus, sein komplexes Gefüge erfordert aber eine aufwändige und sorgfältige Prozessführung.

US 2007 / 0227631 A1 offenbart ein Gleitelement in Form einer Ventilführung. Die Ventilführung besteht aus einer Kupfer-Zink-Legierung, die 2,7 bis 8,3 Gew.-% Mn, 1,5 bis 6 Gew.-% Al, bevorzugt 1 bis 4 Gew.- % Si sowie Fe und Pb enthält. Der Volumenanteil der alpha-Phase beträgt weniger als 80 %.

KR 10 2006 0096877 A offenbart eine Legierung, die aus 58,13 Gew.-% Cu, 1,89 Gew.-% Bi, 1,12 Gew.-% Fe, 0,34 Gew.-% Si und Rest Zn besteht. Die Legierung weist gute Zerspanungseigenschaften auf. Das Dokument enthält keine Hinweise darauf, dass die Legierung für Gleitelemente verwendet wird.

Eine besondere Form von Gleitelementen sind Gleitlagerbuchsen. Bei Gleitlagerbuchsen wird aufgrund der unterschiedlichen Herstellungswege zwischen gerollten und gedrehten Buchsen unterschieden.

Gerollte Buchsen werden aus bandförmigem Halbzeug hergestellt, indem ein entsprechend dimensionierter Bandabschnitt zu einem Hohlzylinder geformt wird und die aneinanderstoßenden Bandkanten verbunden werden. Bevorzugt wird das Ausgangsmaterial im Bandgussverfahren hergestellt. Dabei wird als Gussformat ein relativ dünnes Band gegossen. Dieses wird ohne Warmumformung durch wenige Kaltumformungen auf das Endmaß gewalzt, wobei bei Bedarf Zwischenglühungen erfolgen können. Die verwendete Legierung muss also gut gießbar und sehr gut kaltumformbar sein. Ferner muss sie durch Kaltumformung schnell verfestigen, sodass mit wenig Kaltumformung eine ausreichende Festigkeit und Härte erreicht wird.

Gedrehte Buchsen werden durch Zerspanung aus einem stangen- oder rohrförmigen Halbzeug hergestellt. Zur Herstellung des Halbzeugs wird ein bolzenförmiges Gussformat gegossen, woraus durch einen Warmpressvorgang ein Pressrohr oder eine Stange gepresst wird. Aus dem jeweiligen Pressprodukt wird durch eine Abfolge von Ziehvorgängen das Halbzeug gewonnen, aus dem die Gleitlagerbuchse hergestellt wird. Für diesen Herstellungsweg muss die verwendete Legierung gut warm- und kaltumformbar sein. Ferner muss die Legierung gut zerspanbar sein.

Der Erfindung liegt die Aufgabe zugrunde, ein gegen Verschleiß durch Reibung gegen Stahl beständiges Gleitelement anzugeben, das kostengünstiger als die aus dem Stand der Technik bekannten Gleitelemente ist. Die Kostenreduzierung soll dabei vorwiegend durch eine kostengünstige Herstellung des Halbzeugs, aus dem das Gleitlager gefertigt wird, generiert werden. Die Kostenvorteile sollen sowohl bei der Herstellung von gerollten als auch von gedrehten Gleitlagerbuchsen realisiert werden können. Das Gleitelement muss den technischen und gesetzlichen Anforderungen genügen.

Die Erfindung wird durch die Merkmale des Anspruchs 1 wiedergegeben. Die weiteren rückbezogenen Ansprüche betreffen vorteilhafte Aus- und Weiterbildungen der Erfindung.

Die Erfindung schließt ein Gleitelement aus einer Kupfer-Zink-Legierung ein, wobei die Kupfer-Zink-Legierung die folgende Zusammensetzung (in Gew.-%) aufweist:

60,0 bis 64,0 % Cu,
0,2 bis 0,5 % Si,
0,6 bis 1,2 % Fe,
wahlweise noch bis maximal 1,5 % Sn,
wahlweise noch bis maximal 0,25 % Pb,
wahlweise noch bis maximal 0,08 % P,
Rest Zn und unvermeidbare Verunreinigungen.

Die Kupfer-Zink-Legierung weist dabei ein aus $\alpha$- und $\beta$-Phase bestehendes Gefüge mit einem Volumenanteil

der $\alpha$-Phase von mindestens 90 % auf, wobei in das Gefüge Eisensilizide eingelagert sind.

Lagerwerkstoffe aus Kupfer-Zink-Legierungen weisen üblicherweise einen Anteil von $\alpha$-Phase von weniger als 90 Vol.-% auf, da die $\alpha$-Phase zur Adhäsion und damit zu stärkerem Verschleiß als die $\beta$-Phase neigt. Andererseits macht ein großer Anteil von $\alpha$-Phase den Werkstoff duktil. Der Erfindung liegt nun die Erkenntnis zugrunde, dass durch Zulegieren von Eisen und Silicium zu einer Kupfer-Zink-Legierung mit einem Kupfer-Anteil von 60 bis 64 Gew.-% ein Knetwerkstoff gebildet wird, der sehr duktil und gleichzeitig sehr verschleißbeständig ist. Der Silicium-Anteil der Legierung beträgt dabei mindestens 0,2 Gew.-% und höchstens 0,5 Gew.-%, der Eisen-Anteil beträgt mindestens 0,6 Gew.-% und höchstens 1,2 Gew.-%. Optional enthält die Legierung noch bis zu 1,5 Gew.-% Zinn, bis zu 0,25 Gew.-% Blei und bis zu 0,08 Gew.-% Phosphor. Der Zink-Anteil der Legierung kann je nach genauer Zusammensetzung der Legierung zwischen 32,5 und 38,5 Gew.-%, bevorzugt zwischen 33,5 und 38 Gew.-%, besonders bevorzugt zwischen 34 und 37,5 Gew.-% liegen. Ein Werkstoff, der aus einer Kupfer-Zink-Knetlegierung mit dieser Zusammensetzung hergestellt wird, weist ein aus $\alpha$- und $\beta$-Phase bestehendes Gefüge mit einem Volumenanteil der $\alpha$-Phase von mindestens 90 % auf. In dieses Gefüge sind Eisensilizide eingelagert, deren Volumenanteil 1,5 bis 4,5 % betragen kann. Der Anteil der $\beta$-Phase liegt folglich unter 9 Vol.-%, üblicherweise unter 5 Vol.-% und bevorzugt unter 3 Vol.-%. Typischerweise sind mindestens 0,3 Vol.-% $\beta$-Phase im Gefüge vorhanden.

Eisensilizide sind als Hartphasen die Ursache für die gute Verschleißbeständigkeit des Werkstoffs. Bei einem Silicium-Anteil unter 0,2 Gew.-% würden zu wenig Eisensilizide gebildet werden. Ein Silicium-Anteil von über 0,5 Gew.-% würde zu einer größeren Ausbildung der $\beta$-Phase führen und somit die Duktilität reduzieren. Besonders bevorzugt kann der Silicium-Anteil maximal 0,47 Gew.-% betragen. Bei einem Eisen-Anteil unter 0,6 Gew.-% würden zu wenig Eisensilizide gebildet werden. Besonders bevorzugt beträgt der Eisen-Anteil mindestens 0,8 Gew.-%. Ein Eisen-Anteil von über 1,2 Gew.-% würde sich beim Schmelzen nicht in der Legierung lösen. Es würden sich dann reine Eisenpartikel im Werkstoff bilden, die jedoch unerwünscht sind, da sie weich sind und außerdem leicht aus dem Werkstoff herausbrechen können. Die Eisensilizide bilden Hartphasen mit einer globularen Form und ohne scharfe Kanten. Das Entstehen von inneren Kerben oder Hohlräumen im Gefüge, die bei scharfkantigen Hartphasen nach Umformung auftreten können, ist somit unterdrückt.

Die Volumenanteile der einzelnen Gefügebestandteile der Kupfer-Zink-Legierung werden anhand von metallographischen Schliffen ermittelt. Untersuchungen zeigen, dass die an Schliffbildern ermittelten Flächenanteile der einzelnen Gefügebestandteile unabhängig von der Orientierung der Schlifffläche in der Probe sind. Die Verteilung der einzelnen Phasen kann also als isotrop betrachtet werden und die am Schliff ermittelten Flächenanteile können als Volumenanteile der jeweiligen Gefügebestandteile gewertet werden.

Wahlweise können der Legierung noch bis zu 1,5 Gew.-% Zinn zugegeben werden. Zinn erhöht durch Mischkristallverfestigung die Verschleißbeständigkeit des Werkstoffs. Andererseits reduziert Zinn die Duktilität des Werkstoff, da es ein Zink-Äquivalent von 2 aufweist und somit die Bildung der $\beta$-Phase zu Lasten der $\alpha$-Phase begünstigt. Eine Obergrenze von 1,5 Gew.-% für den Zinnanteil erweist sich als günstig.

Prinzipiell kann der Blei-Anteil in der Legierung bis zu 0,8 Gew.-% betragen. Falls es die gesetzlichen Vorschriften erlauben, können der Legierung bei Bedarf bis zu 0,25 Gew.-% Blei als Spanbrecher zugegeben werden. Bevorzugt beträgt der Bleianteil maximal 0,1 Gew.-%. Besonders bevorzugt weist die Legierung jedoch einen Bleianteil auf, der im Bereich der unvermeidbaren Verunreinigungen liegt. Die Funktion eines erfindungsgemäßen Gleitelements wird durch die Abwesenheit von Blei in der Kupfer-Zink-Legierung nicht beeinträchtigt.

Wahlweise können der Legierung noch bis zu 0,08 Gew.-% Phosphor zugegeben werden. Phosphor dient der Desoxidation der Schmelze und damit bei Anwesenheit von Zinn der Vermeidung von Zinnoxiden.

Ein erfindungsgemäßes Gleitelement wird aus einem Halbzeug der genannten Kupfer-Zink-Knetlegierung hergestellt. Die Herstellung des Halbzeugs erfolgt dabei mittels eines Verfahren, das die Schritte Erschmelzen der Legierung, Gießen und Umformen in der genannten Reihenfolge umfasst. Dabei können die Umformschritte ausschließlich Kaltumformungen sein oder zwischen dem Gießen des Gussformats und der ersten Kaltumformung kann eine Warmumformung durchgeführt werden. Bei Bedarf kann zwischen zwei Umformungen eine Wärmebehandlung erfolgen.

Die genannte Kupfer-Zink-Knetlegierung besitzt Eigenschaften, die eine kostengünstige Herstellung geeigneter Halbzeuge für Gleitelemente ermöglichen. Die Wärmeleitfähigkeit der Legierung ist so hoch, dass die Gießgeschwindigkeit auf dem Niveau der Gießgeschwindigkeit von üblichen Sondermessingen liegt. Der Anteil der $\beta$-Phase im Gussgefüge ist noch ausreichend groß, sodass eine wirtschaftliche Herstellung von Halbzeugen durch Warmumformung möglich ist. Der besondere Vorteil besteht in der guten Kaltumformbarkeit des Werkstoffs. Umformgrade von bis zu 80 % können ohne Zwischenglühung erreicht werden. Als Umformgrad wird hierbei die Reduktion der Querschnittsfläche bei der Umformung definiert. Die Endabmessung des Halbzeugs kann deshalb in wenigen Verfahrensschritten und insbesondere mit wenigen Zwischenglühungen erreicht werden. Ferner nimmt die Festigkeit des Werkstoffs beim Kaltumformen sehr schnell zu, sodass wenige Kaltumformschritte ausreichen, um bei den für Lagerwerkstoffe typischen Halbzeugabmessungen die erforderliche Festigkeit des Werkstoffs zu erreichen.

Der Werkstoff kann nach der letzten Kaltumformung einer Wärmebehandlung von 2 bis 4 Stunden bei einer Temperatur zwischen 200 und 350 °C unterzogen werden. Dadurch wird die Duktilität erhöht, gleichzeitig aber auch die Festigkeit reduziert. Die Streckgrenze $R_{p0,2}$ des Werkstoffs wird dabei stärker reduziert als die Zugfestigkeit $R_m$. Folglich ändert sich durch eine Wärmebehandlung das Verhältnis $R_m$ zu $R_{p0,2}$. Insofern kann man das Verhältnis $R_m$ zu $R_{p0,2}$ als Maß für die Intensität der Wärmebehandlung verwenden. Für den Werkstoff des erfindungsgemäßen Gleitelements liegt das Verhältnis $R_m$ zu $R_{p0,2}$ vor der abschließenden Wärmebehandlung üblicherweise zwischen 1,05 und 1,1. Nach der Wärmebehandlung kann der Quotient $R_m / R_{p0,2}$ Werte bis über 1,5 erreichen. Durch die Wärmebehandlung steigt die Duktilität und damit die Bruchdehnung $A_5$. Je intensiver die Wärmebehandlung, desto größer der Anstieg der Bruchdehnung. Die nach einer Wärmebehandlung erreichte Bruchdehnung lässt sich mit dem Quotienten $R_m / R_{p0,2}$ korrelieren. Für einen Werkstoff des erfindungsgemäßen Gleitelements gilt allgemein die folgende Korrelation zwischen Bruchdehnung $A_5$ (in %) und dem Quotienten $R_m / R_{p0,2}$:

$$A_5 \geq 41\ \% \cdot (R_m / R_{p0,2}) - 38\ \%$$

Der Werkstoff verfügt im Endzustand über eine ausreichende Duktilität, sodass gerollte Gleitlagerbuchsen hergestellt werden können. Ferner ist das Kalibrieren der gefertigten Gleitlagerbuchsen problemlos möglich.

Die Verschleißbeständigkeit eines erfindungsgemäßen Gleitelements wird anhand geeigneter Versuche ermittelt und in Relation zur Verschleißbeständigkeit von Gleitelementen aus bekannten Werkstoffen gesetzt. Bei Tribometer-Tests, bei denen der Verschleiß als Masseverlust eines Probekörpers bei Reibung gegen einen Stahlkörper ermittelt wird, zeigt sich, dass der Masseverlust bei erfindungsgemäßen Gleitelementen ungefähr halb so groß ist wie bei Gleitelementen aus dem Werkstoff CuZn31Si. Der Reibbeiwert ist dabei bei allen Werkstoffen ungefähr gleich. Dieses überraschende Ergebnis dokumentiert die exzellenten Eigenschaften der genannten Kupfer-Zink-Legierung in der Verwendung als Werkstoff für ein Gleitelement.

Da der Grundwerkstoff überwiegend aus kubisch-flächenzentrierter $\alpha$-Phase besteht, ist ein Einbetten von harten Schmutzpartikeln aufgrund der großen Duktilität gewährleistet.

Vorteilhafterweise kann das Verhältnis aus Fe-Anteil zum Si-Anteil mindestens 1,5 und höchstens 3,8 betragen. In diesem Fall sind besonders günstige Bedingungen für die Bildung der Eisensilizide FeSi, $Fe_5Si_3$ und $Fe_2Si$ gegeben. Der Überschuss an Eisen beziehungsweise Silicium, der nicht in Eisensiliziden gebunden ist, ist dann sehr gering. Der nicht in Eisensiliziden gebundene Überschuss an Silicium liegt in der Matrix der Legierung vor. Er besitzt ein Zink-Äquivalent von 10 und wirkt deshalb wie eine Erhöhung des Zink-Anteils in der Legierung. Die Folgen eines großen Überschusses an Silicium wären eine verstärkte Mischkristallverfestigung, was die Duktilität des Werkstoffs reduzieren würde, sowie eine unerwünschte Erhöhung des Anteils von $\beta$-Phase im Gefüge. Besonders bevorzugt kann das Verhältnis aus Fe-Anteil zum Si-Anteil mindestens 2,2 und höchstens 3,0 betragen. Werden der Fe-Anteil und der Si-Anteil so aufeinander abgestimmt, wird die Populationstypenzahl der Eisensilizide erhöht. Es können sich dann mehrere Fraktionen von Eisensiliziden bilden, die sich aufgrund ihrer Partikelgröße unterscheiden.

In bevorzugter Ausgestaltung der Erfindung können in der Kupfer-Zink-Legierung des Gleitelements mindestens zwei Fraktionen von Eisensiliziden vorliegen. Dabei können erste Eisensilizide einen Durchmesser von mindestens 0,02 $\mu m$ und höchstens 0,3 $\mu m$ und eine Dichte von 200 bis 400 Partikel pro 1000 $\mu m^2$ und zweite Eisensilizide einen Durchmesser von mindestens 1 $\mu m$ und höchstens 15 $\mu m$ und eine Dichte von 20 bis 50 Partikel pro 100000 $\mu m^2$ aufweisen. Als Durchmesser eines Eisensilizid-Partikels wird hier der Durchmesser einer zum Partikel volumengleichen Kugel definiert. In dieser Ausgestaltung weist die Legierung des erfindungsgemäßen Gleitelements also eine erste Population aus relativ kleinen Eisensiliziden und eine zweite Population aus relativ großen Eisensiliziden auf. Die zweiten Eisensilizide wirken als besonders verschleißbeständiger Traganteil. Ihr Volumenanteil im Gefüge kann zwischen 1 und 2 % betragen. Aufgrund der geringen Dichte der zweiten Eisensilizide verbleiben zwischen diesen relativ große Zwischenräume. Diese Zwischenräume werden durch die ersten Eisensilizide stabilisiert. Ohne die ersten Eisensilizide würde die Matrix des Werkstoffs in den Zwischenräumen zwischen den zweiten Eisensiliziden durch Verschleiß rasch abgetragen werden. Es würden sich Vertiefungen bilden. Dadurch würden die zweiten Eisensilizide inselartig aus der Matrix herausgearbeitet werden und dann leicht aus dem Werkstoff herausbrechen. Indem die ersten Eisensilizide die Matrix in den Zwischenräumen stabilisieren, verhindern sie das Herausbrechen der zweiten Eisensilizide. Für die besondere Verschleißbeständigkeit des Werkstoffs ist also die Kombination aus ersten und zweiten Eisensiliziden wesentlich.

Bei einer bevorzugten Ausführungsform der Erfindung kann der Sn-Anteil der Kupfer-Zink-Legierung mindestens 0,5 Gew.-% betragen. Zinn wirkt sich vorteilhaft auf Festigkeit und Härte und damit auf die Verschleißfestigkeit der Legierung aus. Für Zinnanteile unter 0,5 Gew.-% ist diese Wirkung gering. Besonders bevorzugt beträgt der Zinnanteil in der Legierung mindestens 0,8 Gew.-%. Andererseits steht ein großer Zinnanteil einer Zunahme der Duktilität des Werkstoff bei einer Wärmebehandlung entgegen. Deshalb ist es besonders vorteilhaft, wenn der Zinnanteil in der Legierung höchstens 1,2 Gew.-% beträgt. Ferner zeichnet sich diese Ausführungsform der Erfindung dadurch aus, dass durch eine Wärmebehandlung ein Endzustand eingestellt werden kann, bei dem die Streckgrenze des Werkstoffs deutlich reduziert ist, obwohl die Zugfestigkeit und die Härte auf einem hohen Niveau bleiben. Diese besondere Eigenschaft ist vorteilhaft für die Herstellung von gedrehten Buchsen, die nach der formgebenden Bearbeitung noch kalibriert werden müssen, sowie für die Verträglichkeit des Gleitelements gegenüber harten Schmutzpartikeln.

Korreliert man für Werkstoffe gemäß dieser bevorzugten Ausführungsform der Erfindung die nach dem Glühen erreichte Härte HB mit dem Quotienten aus Zugfestigkeit $R_m$ und Streckgrenze $R_{p0,2}$, ergibt sich folgender Zusammenhang:

$$HB \geq 350 - 140 \cdot (R_m / R_{p0,2})$$

Bei einer besonders bevorzugten Ausführungsform der Erfindung kann bei einer Kupfer-Zink-Legierung, bei der der Zinn-Anteil mindestens 0,5 Gew.-% beträgt, der Volumenanteil der $\beta$-Phase höchstens 5 % betragen und an Phasengrenzen zwischen $\alpha$- und $\beta$-Phase kann eine zinnreiche Phase angelagert sein. Der Volumenanteil der $\beta$-Phase kann durch den tatsächlichen Zn-Anteil der Legierung und durch eine geeignete Prozessführung bei den Wärmebehandlungen eingestellt werden. Beträgt der Anteil der $\beta$-Phase höchstens 5 Vol.-%, dann ist der Werkstoff sehr gut kaltumformbar. Die zinnreiche Phase ist wie ein Saum mit einer Breite zwischen 1 und 3 $\mu$m an den Phasengrenzen ausgebildet. Die zinnreiche Phase enthält zwischen 7 und 13 Gew.-% Zinn, zwischen 34 und 38 Gew.-% Zink und als Rest Kupfer. Sie enthält kein Fe und kein Si. Die zinnreiche Phase wirkt zusätzlich zu den Eisensiliziden wie ein verschleißbeständiger Traganteil in dem vorwiegend aus $\alpha$-Phase bestehendem Gefüge. Diese besonders bevorzugte Ausführungsform des erfindungsgemäßen Gleitlagers zeichnet sich also durch einen sehr gut kaltumformbaren und gleichzeitig sehr verschleißbeständigen Werkstoff aus.

Bei einer alternativen vorteilhaften Ausführungsform des erfindungsgemäßen Gleitelements kann der Sn-Anteil der Kupfer-Zink-Legierung höchstens 0,09 Gew.-% betragen. Eine solche zinnarme Legierung zeichnet sich durch eine besonders hohe Duktilität aus. Die Legierung kann somit durch eine geringe Anzahl von Kaltumformungen und Zwischenglühungen an die Endabmessung gebracht werden. Dadurch bleiben die Herstellkosten eines erfindungsgemäßen Gleitlagers gering. Für den Endzustand des Werkstoffs ist es günstig, dass eine hohe Duktilität bereits bei geringer Intensität der Wärmebehandlung, also bei geringer Glühtemperatur und/oder kurzer Glühzeit, erreicht wird. Dadurch bleibt die Streckgrenze des Werkstoffs nach dem Glühen auf einem relativ hohen Niveau. Für einen Werkstoff dieser vorteilhaften Ausführungsform des erfindungsgemäßen Gleitelements gilt die folgende Korrelation zwischen Bruchdehnung $A_5$ (in %) und dem Quotienten $R_m / R_{p0,2}$:

$$A_5 \geq 46 \% \cdot (R_m / R_{p0,2}) - 38 \%$$

Die hohe Duktilität des Werkstoff im Endzustand ist vorteilhaft für die Herstellung von gerollten Gleitlagern. Andererseits besitzt ein solches Gleitlager aufgrund der großen Streckgrenze des Werkstoffs eine hohe Widerstandsfähigkeit gegen plastische Verformung im Betrieb.

Bei dieser alternativen vorteilhaften Ausführungsform der Erfindung kann bei zinnarmen Kupfer-Zink-Legierungen der Volumenanteil der $\beta$-Phase bevorzugt höchstens 4 % und besonders bevorzugt höchstens 3 % betragen. Der Volumenanteil der $\beta$-Phase kann durch den tatsächlichen Zn-Anteil der Legierung sowie durch eine geeignete Prozessführung bei den Wärmebehandlungen eingestellt werden. Die Limitierung des Volumenanteils der $\beta$-Phase wirkt sich positiv auf die Duktilität des Werkstoffs aus. Diese besonders bevorzugte Ausführungsform des erfindungsgemäßen Gleitlagers zeichnet sich also durch einen Werkstoff aus, der eine besonders große Duktilität bei hoher Festigkeit aufweist.

Die Erfindung wird anhand von Ausführungsbeispielen näher erläutert.

Verschiedene Proben von Kupfer-Zink-Legierungen wurden erschmolzen und abgegossen. Tabelle 1 zeigt die Zusammensetzung der einzelnen Proben. In der vorletzten Spalte ist das Verhältnis von Eisen zu Silicium angegeben. Der letzten Spalte ist zu entnehmen, wie gut sich die jeweilige Legierung für den in der Aufgabenstellung definierten Zweck eignet. Hierbei sind sowohl die Eignung der Legierung hinsichtlich der Herstellbarkeit des Halbzeugs als auch ihre Eignung hinsichtlich der Verwendung als Gleitelement in die Bewertung eingeflossen.

Tabelle 1: Zusammensetzung der Proben in Gew.-%

| Probe Nr. | Cu | Fe | Si | Sn | Pb | P | Zn und Verunreinigungen | Fe/Si | Eignung |
|---|---|---|---|---|---|---|---|---|---|
| | Gew.-% | Gew.-% | Gew.-% | Gew.-% | Gew.-% | Gew.-% | Gew.-% | | |
| 1 | 61,60 | 0,850 | 0,211 | 1,000 | < 0,05 | 0,006 | Rest | 4,03 | gut |
| 2 | 61,08 | 0,788 | 0,329 | 1,020 | < 0,05 | 0,007 | Rest | 2,40 | exzellent |

(fortgesetzt)

| Probe Nr. | Cu | Fe | Si | Sn | Pb | P | Zn und Verunreinigungen | Fe/Si | Eignung |
|---|---|---|---|---|---|---|---|---|---|
| | Gew.-% | Gew.-% | Gew.-% | Gew.-% | Gew.-% | Gew.-% | Gew.-% | | |
| 3 | 61,88 | 0,921 | 0,219 | 1,004 | < 0,05 | 0,008 | Rest | 4,21 | gut |
| 4 | 63,56 | 0,892 | 0,235 | 1,007 | < 0,05 | 0,006 | Rest | 3,80 | sehr gut |
| 5 | 60,86 | 0,884 | 0,241 | 0,987 | < 0,05 | 0,004 | Rest | 3,67 | sehr gut |
| 6 | 60,43 | 0,853 | 0,300 | 1,018 | < 0,05 | 0,007 | Rest | 2,84 | exzellent |
| 11 | 62,50 | 0,803 | 0,322 | < 0,01 | < 0,05 | 0,0006 | Rest | 2,49 | exzellent |
| 12 | 62,40 | 0,771 | 0,261 | 0,0026 | < 0,05 | 0,0005 | Rest | 2,95 | exzellent |
| 13 | 62,06 | 0,926 | 0,249 | 0,01 | < 0,05 | 0,0007 | Rest | 3,72 | sehr gut |
| 14 | 63,89 | 1,013 | 0,308 | 0,013 | < 0,05 | 0,0006 | Rest | 3,29 | sehr gut |
| 15 | 61,71 | 0,835 | 0,220 | < 0,01 | < 0,05 | 0,0007 | Rest | 3,80 | sehr gut |
| 16 | 61,66 | 0,988 | 0,282 | < 0,01 | < 0,05 | 0,0005 | Rest | 3,50 | sehr gut |

Die Proben Nr. 1 bis 6 weisen einen Zinn-Anteil von ungefähr 1 Gew.-% auf, während die Proben Nr. 11 bis 16 maximal 0,013 Gew.-% Zinn enthalten. Aus jeder Legierung wurden nach dem Gießen über zwei verschiedene Prozesswege Halbzeuge hergestellt, die sich zur Fertigung von Gleitelementen eignen.

Der erste Prozessweg umfasst nach dem Gießen die folgenden Schritte:

1. Strangpressen

2. Kaltumformen

3. Zwischenglühen bei 500 °C / 3 h

4. Kaltumformen

5. Wärmebehandlung bei 300 °C

Dieser Prozessweg entspricht der Herstellung von Halbzeug für gedrehte Gleitlagerbuchsen.

Der zweite Prozessweg umfasst nach dem Gießen die folgenden Schritte:

1. Kaltumformen (Walzen)

2. Zwischenglühen bei 500 °C / 3 h

3. Kaltumformen (Walzen)

4. Wärmebehandlung bei 300 °C

Dieser Prozessweg entspricht der Herstellung von Halbzeug für gerollte Gleitlagerbuchsen.

Die Proben Nr. 6 (zinnhaltig) und 11 (zinnarm) wurden detaillierter untersucht. Variiert wurden dabei die Temperatur und die Dauer der abschließenden Wärmebehandlung. Für Probe Nr. 6 wurden die in Tabelle 2 dargestellten mechanischen Kennwerte erreicht. Für Probe Nr. 11 wurden die in Tabelle 3 dargestellten mechanischen Kennwerte erreicht.

Tabelle 2: Mechanische Kennwerte der Probe Nr. 6 nach Wärmebehandlung

| | Zugfestigkeit $R_m$ in MPa | Streckgrenze $R_{p0,2}$ in MPa | $R_m/R_{p0,2}$ | Bruchdehnung $A_5$ in % | Härte HB |
|---|---|---|---|---|---|
| | 635 | 542 | 1,172 | 11,7 | 190 |
| | 598 | 487 | 1,228 | 12,9 | 178 |
| Probe Nr. 6 | 587 | 486 | 1,209 | 16,9 | 182 |
| | 557 | 427 | 1,304 | 15,6 | 171 |
| | 524 | 395 | 1,327 | 22 | 157 |
| | 493 | 311 | 1,585 | 30 | 131 |

Tabelle 3: Mechanische Kennwerte der Probe Nr. 11 nach Wärmebehandlung

| | Zugfestigkeit $R_m$ in MPa | Streckgrenze $R_{p0,2}$ in MPa | $R_m/R_{p0,2}$ | Bruchdehnung $A_5$ in % | Härte HB |
|---|---|---|---|---|---|
| | 604 | 550 | 1,098 | 12,9 | 185 |
| | 595 | 527 | 1,129 | 16,1 | 181 |
| Probe Nr. 11 | 547 | 478 | 1,144 | 14,7 | 173 |
| | 536 | 452 | 1,186 | 17,5 | 167 |
| | 455 | 286 | 1,591 | 35,9 | 121 |

Bei beiden Proben konnte durch eine geeignete Auswahl der Temperatur und der Zeitdauer der Wärmebehandlung die Bruchdehnung $A_5$ auf mindestens 15 % angehoben werden. Die Härte lag dann zwischen 170 und 180 HB, die Zugfestigkeit in einem Bereich zwischen 550 und 600 MPa. Bei Probe Nr. 11 lag die Streckgrenze dabei auf einem etwas höheren Niveau als bei Probe Nr. 6.

Führte man die Wärmebehandlung so aus, dass die Bruchdehnung $A_5$ auf mindestens 20 % angehoben wurde, dann betrug die Zugfestigkeit des Werkstoffs mindestens 520 MPa und die Härte mindestens 150 HB.

Die Reib- und Verschleißeigenschaften eines erfindungsgemäßen Gleitelements wurden mittels eines Scheibe-Ring-Triobometers untersucht. Ein erfindungsgemäßes Gleitelement wurde dabei jeweils durch eine Scheibe aus den Werkstoffen gemäß Probe 6 und Probe 11 dargestellt. Als Gegenlaufpartner diente ein Ring aus Stahl. Als Vergleichsobjekt wurde ein Gleitelement aus dem Werkstoff CuZn31Si1 verwendet. Für die Untersuchungen wurden jeweils Versuchskörper aus einem Werkstoff eingesetzt, der nach der abschließenden Wärmebehandlung eine Bruchdehnung $A_5$ von ungefähr 15 % aufwies. Der Reibbeiwert wurde in bekannter Weise definiert und ermittelt. Als Maß für den Verschleiß des Werkstoffs diente der Masseverlust des Versuchskörpers nach einer bestimmten Versuchsdauer. Der Masseverlust wurde auf den Masseverlust des Vergleichsobjekts bezogen und ist als relativer Masseverlust bezeichnet. In Tabelle 4 sind die Ergebnisse dieser Untersuchungen zusammengestellt.

Tabelle 4: Ergebnisse der Untersuchungen der Verschleißeigenschaften

| | CuZn31Si1 | Probe 6 | Probe 11 |
|---|---|---|---|
| Reibbeiwert $\mu$ [-] | 0,093 | 0,103 | 0,084 |
| relativer Masseverlust | 100 % | 47,8 % | 46,7 % |

Der Reibbeiwert der Probe 6 lag um 11 % über dem der Probe aus CuZn31Si1, der Reibbeiwert der Probe 11 lag um 10 % unter dem der Probe aus CuZn31Si1. Der Masseverlust der erfindungsgemäßen Gleitelemente betrug weniger als die Hälfte des Masseverlusts, der am Vergleichsobjekt aus CuZn31Si1 ermittelt wurde. Die Werkstoffe des erfindungsgemäßen Gleitelements sind damit signifikant verschleißbeständiger als CuZn31Si1.

**Patentansprüche**

1.  Gleitelement aus einer Kupfer-Zink-Legierung, welche die folgenden Bestandteile (in Gew.-%) enthält:

60,0 bis 64,0 % Cu,
0,2 bis 0,5 % Si,
0,6 bis 1,2 % Fe,
wahlweise noch bis maximal 1,5 % Sn,
wahlweise noch bis maximal 0,25 % Pb,
wahlweise noch bis maximal 0,08 % P,
Rest Zn und unvermeidbare Verunreinigungen,
**dadurch gekennzeichnet,**
**dass** die Kupfer-Zink-Legierung ein aus $\alpha$- und $\beta$-Phase bestehendes Gefüge mit einem Volumenanteil der $\alpha$-Phase von mindestens 90 % aufweist, wobei in das Gefüge Eisensilizide eingelagert sind.

2. Gleitelement nach Anspruch 1, **dadurch gekennzeichnet, dass** das Verhältnis aus Fe-Anteil zum Si-Anteil mindestens 1,5 und höchstens 3,8 beträgt.

3. Gleitelement nach Anspruch 1 oder 2, **dadurch gekennzeichnet, dass** mindestens zwei Fraktionen von Eisensiliziden vorliegen, wobei erste Eisensilizide einen Durchmesser von höchstens 0,3 $\mu$m und eine Dichte von 200 bis 400 Partikel pro 1000 $\mu$m$^2$ aufweisen, und wobei zweite Eisensilizide einen Durchmesser von mindestens 1 $\mu$m und höchstens 15 $\mu$m und eine Dichte von 20 bis 50 Partikel pro 100000 $\mu$m$^2$ aufweisen.

4. Gleitelement nach einem der Ansprüche 1 bis 3, **dadurch gekennzeichnet, dass** der Sn-Anteil mindestens 0,5 Gew.-% beträgt.

5. Gleitelement nach Anspruch 4, **dadurch gekennzeichnet, dass** der Volumenanteil der $\beta$-Phase höchstens 5 % beträgt und dass an Phasengrenzen zwischen $\alpha$- und $\beta$-Phase eine zinnreiche Phase angelagert ist.

6. Gleitelement nach einem der Ansprüche 1 bis 3, **dadurch gekennzeichnet, dass** der Sn-Anteil höchstens 0,09 Gew.-% beträgt.

7. Gleitelement nach Anspruch 6, **dadurch gekennzeichnet, dass** der Volumenanteil der $\beta$-Phase höchstens 4 % beträgt.


**Claims**

1. Sliding element comprising a copper/zinc alloy, which contains the following components (in % by weight):

from 60.0 to 64.0% Cu,
from 0.2 to 0.5% Si,
from 0.6 to 1.2% Fe,
optionally also up to a maximum of 1.5% Sn,
optionally also up to a maximum of 0.25% Pb,
optionally also up to a maximum of 0.08% P,
the balance being Zn and inevitable impurities,
**characterised in that**
the copper/zinc alloy has a structure which comprises $\alpha$-phase and $\beta$-phase and which has a volume proportion of the $\alpha$-phase of at least 90%, wherein iron silicides are intercalated in the structure.

2. Sliding element according to claim 1, **characterised in that** the ratio of Fe proportion to Si proportion is at least 1.5 and a maximum of 3.8.

3. Sliding element according to claim 1 or claim 2, **characterised in that** there are at least two fractions of iron silicides, wherein first iron silicides have a diameter of a maximum of 0.3 $\mu$m and a density of from 200 to 400 particles per 1000 $\mu$m$^2$, and wherein second iron silicides have a diameter of at least 1 $\mu$m and a maximum of 15 $\mu$m and a density of from 20 to 50 particles per 100,000 $\mu$m$^2$.

4. Sliding element according to any one of claims 1 to 3, **characterised in that** the Sn proportion is at least 0.5% by weight.

**5.** Sliding element according to claim 4, **characterised in that** the volume proportion of the β-phase is a maximum of 5% and **in that** at phase boundaries between the α-phase and β-phase a tin-rich phase is accumulated.

**6.** Sliding element according to any one of claims 1 to 3, **characterised in that** the Sn proportion is a maximum of 0.09% by weight.

**7.** Sliding element according to claim 6, **characterised in that** the volume proportion of the β-phase is a maximum of 4%.

**Revendications**

**1.** Élément à glissement en un alliage cuivre-zinc qui contient les constituants suivants (en % en poids) :

60,0 à 64,0 % de Cu,
0,2 à 0,5 % de Si,
0,6 à 1,2 % de Fe,
au choix encore jusqu'à au maximum 1,5 % de Sn,
au choix encore jusqu'à au maximum 0,25 % de Pb,
au choix encore jusqu'à au maximum 0,08 % de P,
le reste étant Zn et des impuretés inévitables,
**caractérisé en ce que** l'alliage cuivre-zinc présente une structure consistant en une phase α et une phase β avec une proportion en volume de la phase α d'au moins 90 %, où des siliciures de fer sont inclus dans la structure.

**2.** Élément à glissement selon la revendication 1, **caractérisé en ce que** le rapport de la proportion de Fe à la proportion de Si est d'au moins 1,5 et d'au plus 3,8.

**3.** Élément à glissement selon la revendication 1 ou 2, **caractérisé en ce qu'**au moins deux fractions de siliciures de fer sont présentes, où des premiers siliciures de fer présentent un diamètre d'au plus 0,3 $\mu$m et une densité de 200 à 400 particules pour 1000 $\mu$m$^2$, et où des seconds siliciures de fer présentent un diamètre d'au moins 1 $\mu$m et d'au plus 15 $\mu$m et une densité de 20 à 50 particules pour 100000 $\mu$m$^2$.

**4.** Élément à glissement selon l'une des revendications 1 à 3, **caractérisé en ce que** la proportion de Sn est d'au moins 0,5 % en poids.

**5.** Élément à glissement selon la revendication 4, **caractérisé en ce que** la proportion en volume de la phase β est d'au plus 5 % et **en ce qu'**une phase riche en étain est présente aux limites de phases entre la phase α et la phase β.

**6.** Élément à glissement selon l'une des revendications 1 à 3, **caractérisé en ce que** la proportion de Sn est d'au plus 0,09 % en poids.

**7.** Élément à glissement selon la revendication 6, **caractérisé en ce que** la proportion en volume de la phase β est d'au plus 4 %.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1158062 B1
- DE 102007029991 B4
- US 20070227631 A1
- KR 1020060096877 A